# EUROPÄISCHE PATENTANMELDUNG

(11) **EP 1 377 080 A1**
(43) Veröffentlichungstag der Anmeldung: **02.01.2004**
(21) Anmeldenummer: 03013870.5
(22) Anmeldetag: 18.06.2003
(51) Int. Cl.: H04N 17/04

(54) **Verfahren und Vorrichtung zum Messen der Bildqualität des Displays eines Mobiltelefons**

(30) Priorität: 26.06.2002 DE 10228579
(71) Anmelder: Rohde & Schwarz GmbH & Co. KG, 81671 München (DE)
(72) Erfinder: Lauterjung, Jürgen, Dr., 82008 Unterhaching (DE); Ibl, Harald, 85643 Steinhöring (DE)
(74) Vertreter: Körfer, Thomas, Dipl.-Phys.

(57) **Zusammenfassung**

Zum Messen der Qualität von Bildern und/oder Videosequenzen, die auf einem Display (1) eines Mobiltelefons (2) dargestellt werden, wird mittels einer digitalen Videokamera (3) ein auf dem Display (1) dargestelltes Bild aufgenommen wird. Die so in geometrischer und zeitlicher Auflösung der Videokamera gewonnen Kamera-Bilddaten werden dann in der geometrischen und zeitlichen Auflösung des Displays (1) entsprechende Display-Bilddaten umgewandelt. Diese Display-Bilddaten werden schließlich einer Qualitätsanalyse unterworfen.

## Beschreibung

Die Erfindung betrifft ein Verfahren und eine Vorrichtung zum Messen der Qualität von Bildern und/oder Videosequenzen, die auf Displays von Mobiltelefonen dargestellt werden.

In der digitalen Video-Übertragungstechnik werden in zunehmendem Maße datenreduzierende Codierverfahren verwendet. Zu ihnen gehören die sogenannten MPEG-Codierverfahren, die eine blockbasierte diskrete Kosinustransformation (DCT) durchführen. Diese digitale Video-Übertragungstechnik wird auch beim künftigen UMTS-Mobilfunk eingesetzt und es besteht Bedarf darin, die Qualität, mit der ein Schwarzweiß- oder Farbbild auf dem Display des Mobiltelefons dargestellt wird, objektiv zu bewerten. Eine Messung der Bilddaten am Ausgang des Decoders für das komprimierte Video-Signal ist dazu nur bedingt geeignet, da sie nicht den Display-Treiber und das Display selbst mit in die objektive Bildqualitätsbewertung mit einbezieht.

Es ist daher Aufgabe der Erfindung, ein einfaches Verfahren und eine Vorrichtung aufzuzeigen, mit dem die Bildqualität eines Mobiltelefons objektiv meßbar ist.

Diese Aufgabe wird gelöst durch ein Verfahren gemäß Anspruch 1 und eine Vorrichtung gemäß Anspruch 8. Vorteilhafte Weiterbildungen ergeben sich aus den Unteransprüchen.

Beim erfindungsgemäßen Verfahren wird der gesamte Signalaufbereitungsweg bis zur unmittelbaren Anzeige des Videobildes auf dem Display des Mobiltelefons erfaßt und das erfindungsgemäße Verfahren liefert also eine vollständige objektive Qualitätsbewertung. Die eigentliche Qualitätsanalyse erfolgt in an sich bekannter Weise beispielsweise nach der deutschen Patentanmeldung DE 197 18 063 A1. Die Analyse kann auch nach dem bekannten PSNR-Auswertverfahren (Peak Signal - to - Noise Ratio) erfolgen. Auch jede andere bekannte oder künftig noch entwickelte Qualitätsanalyse ist für diesen Zweck geeignet. Wenn für die Analyse senderseitig ein Testbild oder eine Testsequenz eingespeist wird, kann die Qualitätsanalyse natürlich auch durch Vergleich der Signalkomponenten z. B. RGB (Rot Grün Blau) oder Y (Lumineszenz) bzw. U und V (Farbdifferenzsignale) der umgewandelten Display-Bilddaten mit den entsprechenden Referenzwerten des Testsignals erfolgen.

Die Erfindung wird im Folgenden anhand einer schematischen Zeichnung an einem Ausführungsbeispiel näher erläutert. In der Zeichnung zeigen:
- Fig. 1: das Prinzipschaltbild einer Vorrichtung zum Messen der Bildqualität
- Fig. 2: ein Detail von Fig. 1 und
- Fig. 3: die Lage der Pixel

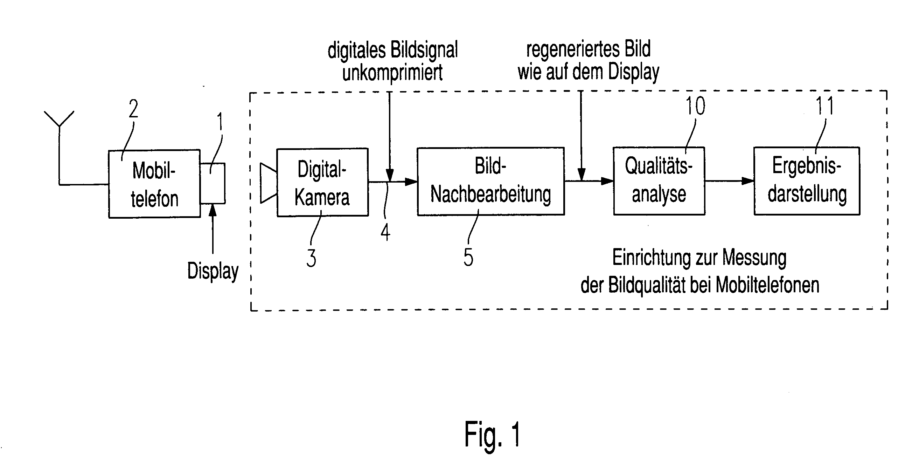

Fig. 1 zeigt das Prinzipschaltbild einer Vorrichtung zum Messen der Bildqualität des Displays 1 eines üblichen Mobiltelefons 2, das über seine Antenne ein nach einem bekannten datenreduzierenden Codierverfahren, beispielsweise MPEG4 datenreduziertes Videosignal empfängt, decodiert und über einen Treiber am Display als Bild darstellt.

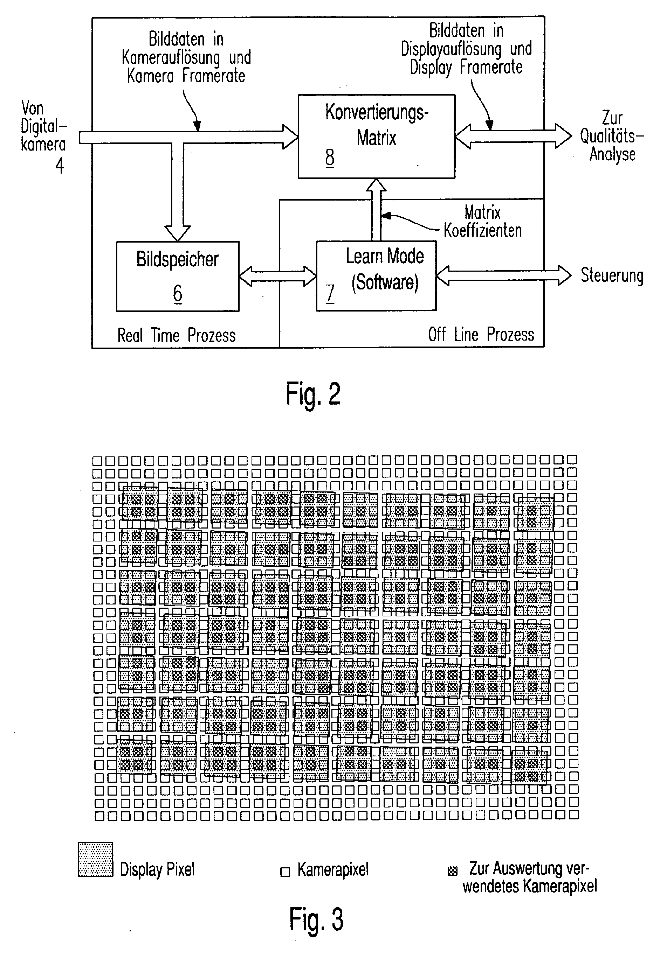

Zur Messung der Bildqualität 1 dient eine Digitalkamera 3, deren Objektiv auf das Display 1 gerichtet wird, und die mit Überabtastung entsprechend dem Shannon'schen Theorem am Ausgang 4 ein unkomprimiertes digitales Bildsignal erzeugt und so das am Display 1 dargestellte Bild exakt wiedergibt. Dieses digitale Kamera-Bildsignal wird in einer anschließenden Bild-Nachbearbeitungseinrichtung 5 weiterverarbeitet, wie dies Fig. 2 im Detail zeigt. Die Kamera-Bilddaten, die je nach Art der verwendeten Digitalkamera in bestimmter geometrischer und zeitlicher Auflösung entstehen, werden in Echtzeit in entsprechende Display-Bilddaten umgewandelt, die in ihrer geometrischen und zeitlichen Auflösung denjenigen des Displays des Mobiltelefons entsprechen. Dazu werden die Kamera-Bilddaten über einen Zeitabschnitt, der mindestens drei aufeinanderfolgenden Display-Bildern entspricht, in einem Bildspeicher 6 abgespeichert.

Aus diesem abgespeicherten Daten ermittelt eine Software 7 in einem Off-line-Prozeß Matrixkoeffizienten, die in eine Konvertierungsmatrix 8 geladen werden. In der Konvertierungsmatrix 8 werden in Echtzeit für jedes Display-Pixel (in Fig. 3 schraffiert dargestellt) aus dem zugehörigen Kamera-Pixel (in Fig. 3 als kleine Quadrate dargestellt) ein Pixelwert erzeugt. Die Matrix ist so aufgebaut, daß auch Ausrichtungsfehler der Digitalkamera wie Schräglage, Kissenverzerrungen, Abweichungen von der optischen Achse und dergleichen kompensiert werden können. Die Erzeugung dieser Pixelwerte geschieht gemäß Fig. 3 örtlich und zeitlich. Es wird also für jeden Display-Pixel mindestens ein schwarz dargestellter Kamera-Pixel für die anschließende Qualitätsanalyse ausgewählt.

Über die Software 7 lernt die Vorrichtung selbsttätig aus den im Speicher 6 gespeicherten Bilddaten die Struktur des Displays 1, so daß die Kamera-Bilddaten selbsttätig in die entsprechenden Display-Bilddaten mit der am Display verwendeten Auflösung und Wiederholrate umgewandelt werden, die dann in an sich bekannter Weise in der Qualitätsanalyseeinrichtung 10 analysiert und als Ergebnis dargestellt werden. Die Regenerierung und Umwandlung der Kamera-Bilddaten in die Display-Bilddaten kann vereinfacht werden, wenn ein bekanntes Testbild in das Mobiltelefon eingespeist wird, da dann unmittelbar ein Pixelweiser Vergleich der Signalkomponenten (RGB oder YUV) mit den entsprechenden bekannten Referenzwerten des Testbildes durchgeführt werden kann, wobei gleichzeitig auch noch eine entsprechende Gewichtungsfunktion zur Einbeziehung der Eigenschaften der menschlichen Wahrnehmung berücksichtigt werden kann.

Vor einer Bildqualitätsbewertung gemäß der Erfindung kann es von Vorteil sein, zunächst durch eine Voranalyse auf Protokollebene festzustellen, ob die Bilddaten überhaupt vollständig und unverfälscht zum Mobiltelefon übertragen werden. Diese vorausgehende Protokollanalyse kann in bekannter Weise im Mobiltelefon durch Analyse des Transport-Datenstromes durchgeführt werden.

Die Ergebnisdarstellung der Video-Qualität kann als Kurvenverlauf über den Zeit oder der Anzahl der Bilder erfolgen, ggf. kombiniert mit einer Schwellwertüberwachung. Auch eine Darstellung der Abweichung von Referenzwerten des Testbildes unter verschiedenen Empfangsbedingungen ist möglich.

## Patentansprüche

1. Verfahren zum Messen der Qualität von Bildern und/oder Videosequenzen, die auf einem Display (1) eines Mobiltelefons (2) dargestellt werden,
wobei mittels einer digitalen Videokamera (3) ein auf dem Display (1) dargestelltes Bild aufgenommen wird,
die so in geometrischer und zeitlicher Auflösung der Videokamera gewonnen Kamera-Bilddaten in der geometrischen und zeitlichen Auflösung des Displays (1) entsprechende Display-Bilddaten umgewandelt werden,
und diese Display-Bilddaten dann einer Qualitätsanalyse unterworfen werden.

2. Verfahren nach Anspruch 1,
**dadurch gekennzeichnet,**
**daß** die Kamera-Bilddaten in der Videokamera durch Überabtastung des Display-Bildes erzeugt werden.

3. Verfahren nach Anspruch 1 oder 2,
**dadurch gekennzeichnet,**
**daß** bei der Umwandlung der Kamera-Bilddaten in Display-Bilddaten gleichzeitig ein evtl. Ausrichtfehler der Videokamera (3) gegenüber dem Display (1) (Schräglage, Kissenverzerrung, Abweichungen von der optischen Achse) korrigiert wird.

4. Verfahren nach einem der vorhergehenden Ansprüche,
**dadurch gekennzeichnet,**
**daß** die Qualitätsanalyse unter Einbeziehung der Blocking-Artefakte eines datenreduzierten DCT-Codierverfahrens durchgeführt wird.

5. Verfahren nach einem der vorhergehenden Ansprüche,
**dadurch gekennzeichnet,**
**daß** auf dem Display (1) ein Testbild, insbesondere ein Schachbrettmuster, dargestellt wird.

6. Verfahren nach Anspruch 5,
**dadurch gekennzeichnet,**
**daß** die Qualitätsanalyse durch Vergleich der Signalkomponenten der Display-Bilddaten mit den entsprechenden Signalkomponenten des Testbildes erfolgt.

7. Verfahren nach einem der vorhergehenden Ansprüche,
**dadurch gekennzeichnet,**
**daß** vor der Messung der Bildqualität am Empfangssignal des Mobiltelefons (2) eine Voranalyse der Qualität der Datenübertragung auf Protokollebene durchgeführt wird.

8. Vorrichtung zum Messen der Qualität von Bildern und/oder Videosequenzen, die auf einem Display (1) eines Mobiltelefons (2) darstellbar sind mit
einer digitalen Videokamera (3), deren Aufnahmeobjektiv auf das zu vermessende Display (1) des Mobiltelefons (2) ausrichtbar ist, einer Bild-Nachbearbeitungseinrichtung (5) in welcher über eine Konvertierungsmatrix (8) die in geometrischer und zeitlicher Auflösung der Videokamera (3) erzeugten Kamera-Bilddaten in der geometrischen und zeitlichen Auflösung des Displays (1) entsprechende Display-Bilddaten umgewandelt werden, die dann in einer Qualitätsanalyseeinrichtung (10) ausgewertet werden.
